# EUROPÄISCHE PATENTSCHRIFT

(11) **EP 2 122 298 B1**
(45) Veröffentlichungstag und Bekanntmachung des Hinweises auf die Patenterteilung: **28.07.2010**
(21) Anmeldenummer: 08715447.2
(22) Anmeldetag: 06.02.2008
(51) Int. Cl.: G01B 7/02, B23D 59/00

(54) **MESSSTEMPEL**
MEASURING RAM
MATRICE DE MESURE

(30) Priorität: 21.02.2007 DE 102007008887
(43) Veröffentlichungstag der Anmeldung: 25.11.2009
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2008/000205
(87) Internationale Veröffentlichungsnummer: WO 2008/101464

(56) Entgegenhaltungen:
- DE-A1-102006 025 506
- DE-U1- 9 203 582
- US-A- 3 975 829

## Beschreibung

Die Erfindung betrifft eine Messeinrichtung zur Messung der Länge von in einer Längsrichtung angeordneten länglichen Profilen, insbesondere Rohren, zwischen mindestens zwei sich gegenüberliegenden Messschenkeln.

Messeinrichtungen zur Messung der Länge von Rohren sind im Stand der Technik hinlänglich bekannt.

In der DE 430 82 83 C2 ist eine Messvorrichtung beschrieben, die die Länge oder andere Maßkriterien eines Rohres zu messen ermöglicht. Dabei sind Messeinsätze austauschbar an der Vorrichtung angeordnet.

In der US 3,975,829 ist eine Messeinrichtung beschrieben, die die Kontrolle der Abmessung eines Werkstückes ermöglicht. Dabei ist ein Messkopf vorgesehen, der über eine Feder rückstellbar ist und der hydraulisch gedämpft ist.

Nachteilig an den oben beschriebenen Messeinrichtungen sind der vielteilige Aufbau und damit verbundene Verschleißerscheinungen sowie häufigere Wartungsarbeiten.

Es ist deshalb Aufgabe der vorliegenden Erfindung, eine eingangs genannte Messeinrichtung zur Verfügung zu stellen, die aus einer vergleichsweise geringen Anzahl an Bauteilen aufgebaut ist.

Diese Aufgabe wird mit einer eingangs genannten Messeinrichtung erfüllt, die die Merkmale des unabhängigen Anspruchs 1 aufweist.

Die erfindungsgemäße Messeinrichtung weist dazu im Wesentlichen zwei voneinander beabstandete Messschenkel auf, von denen wenigstens einer verfahrbar ist.

Vorzugsweise ist der verfahrbare Messschenkel mit einem Entfernungsmesser verbunden, der es gestattet, den Abstand zwischen den beiden Messschenkeln im Groben zu bestimmen.

Zur präzisen, d.h. bis auf 0,4 µm genauen Bestimmung der Länge eines länglichen Profils, insbesondere metallischen Hohl- oder Vollprofils, ist es erfindungsgemäß vorgesehen, Messtempel in wenigstens einem der Messschenkel vorzusehen. Vorzugsweise sind die Messstempel alle in einem der beiden, günstigenfalls in dem verfahrbaren Messschenkel angeordnet, damit kann die Messelektronik an einem Ort untergebracht sein.

Die Messeinrichtung gestattet auch die gleichzeitige hochpräzise Messung einer Vielzahl an Profilen, dazu ist eine der Vielzahl entsprechende Anzahl an Messstempeln vorgesehen. Vorzugsweise weist der verfahrbare Messschenkel zwei, drei oder vier Messtempel auf.

Jeder der Messstempel ist vorzugsweise einteilig ausgebildet und wirkt mit einem ihm zugeordneten Messsensor zusammen. Der Messstempel weist jeweils eine Kontaktzunge, zwei Stege und einen beweglichen sowie einen positionsfesten Abstandsabschnitt auf. Ein positionsfester Abschnitt kann mehreren, insbesondere zwei benachbarten Messstempeln zugeordnet sein.

Durch Druckausübung eines Endes eines Profils auf eine der Kontaktzungen, wird diese etwas, insbesondere weniger als 1 mm, in den Messschenkel hineingedrückt. Durch das Eindrücken der Kontaktzunge verformen sich zwei die beiden im Wesentlichen parallel zur Kontaktzunge angeordneten Stege, die ebenfalls einteilig über den jeweiligen beweglichen Abstandsabschnitt mit der Kontaktzunge verbunden sind.

Ein erstes Ende der beiden Stege ist mit dem positionsfesten Abstandsabschnitt und ein zweites Ende der beiden Stege ist mit dem beweglichen Abstandsabschnitt integral verbunden.

Die erfindungsgemäße Anordnung entspricht kinematisch der eines viergelenkigen Getriebes. In der Entsprechung wäre an den vier Übergangsstellen der Stege zu den Abstandsabschnitten jeweils ein Gelenk angeordnet.

Demgegenüber ist die erfindungsgemäße Ausbildung als einstückiges integrales Bauteil besonders verschleißarm, wartungsfrei und durch Drahterosionsverfahren hoch präzise herstellbar. Vorzugsweise besteht der Messtempel aus Stahl.

Verformungen von Teilen des Messstempels sind mit einem Messsensor, insbesondere einem Entfernungsmesssensor, bestimmbar. Vorzugsweise ist der Sensorbereich des Messsensors auf den ersten, nur durch einen ersten Spalt von der Kontaktzunge beabstandeten Steg gerichtet. Während der Messung bestimmt der Messsensor den Abstand zwischen sich und der ihm zugewandten Steg oberfläche. Derartige Messungen können mit induktiven Messsensoren mit einer Präzision von 0,4 µm und genauer durchgeführt werden.

Günstigenfalls ist die Kontaktzunge auch einstückig mit dem beweglichen Abstandsabschnitt verbunden und die auf sie während der Längenmessung ausgeübte Druckkraft wird in eine Längsbewegung, insbesondere des beweglichen Abstandsabschnitts, umgewandelt. Eine Bewegung senkrecht zur Längsrichtung oder eine Drehbewegung der Kontaktzunge findet nicht oder in nicht messbarem Umfang statt.

Günstigenfalls ist für jeden Messstempel ein erster Steg über einen schmalen Spalt von der Kontaktzunge beabstandet und ein zweiter Steg durch einen Freiraum von dem ersten Steg beabstandet. Dabei ist der erste Steg zwischen der Kontaktzunge und dem zweiten Steg vorgesehen.

Günstigenfalls ist jeder der Messsensoren positionsfest mit dem Messschenkel verbunden und durch eine Öffnung in dem jeweiligen zweiten Steg durch diesen hindurchgeführt. Die Sensorfläche ist im Wesentlichen frei im Freiraum zwischen dem ersten und zweiten Steg angeordnet. Der Sensor ist dabei auf eine der Kontaktzunge abgewandten Fläche des ersten Steges gerichtet. Die vorzugsweise verwendeten induktiven Messsysteme ermöglichen hochexakte Messungen nur dann, wenn der Sensorbereich im Wesentlichen frei ist. Das heißt, es dürfen auch seitlich vom Sensorbereich keine Bauteile des Messstempels angeordnet sein. Diese Voraussetzung für eine Hochpräzisionsmessung wird erfindungsgemäß dadurch gewährleistet, dass der Sensorkopf im Freiraum zwischen den beiden Stegen vorgesehen ist.

Zur Bestimmung der Gesamtlänge eines oder mehrerer Rohrabschnitte ist der verfahrbare Messschenkel mit einem Entfemungsmesser zur Messung der Verfahrstrecke verbunden und der Entfemungsmesser und der wenigstens eine Messsensor sind an eine Datenverarbeitungseinheit angeschlossen, mit der die Profillänge aus den ihr zugelieferten Messdaten numerisch bestimmbar ist.

In einer besonders günstigen Anordnung der Messstempel sind diese in zwei Reihen am verfahrbaren Messschenkel nebeneinander vertikal versetzt zueinander vorgesehen. Diese Anordnung der Messstempel eignet sich insbesondere im Zusammenwirken mit einer im Querschnitt senkrecht zur Längsrichtung der Profile im Wesentlichen trichterförmig ausgebildeten Aufnahme für die gleichzeitig zu vermessenden Rohrabschnitte.

Damit eine variable Anzahl von Profilen messbar ist, sind die Messsensoren jeweils mit einem Schalter verbunden, durch den sie individuell ein- und ausschaltbar sind. Dadurch ist es möglich, auch mit einer Messeinrichtung, die ursprünglich beispielsweise für vier gleichzeitig zu vermessende Profile ausgelegt ist, auch gleichzeitig zwei, drei oder genau ein Profil zu messen.

Die Erfindung wird anhand eines Ausführungsbeispiels in sechs Figuren beschrieben. Dabei zeigen:
- Fig. 1: seitliche Ansicht einer erfindungsgemäßen Messeinrichtung,
- Fig. 2: perspektivische Ansicht eines verfahrbaren Messschenkels der Messeinrichtung gem. Fig. 1,
- Fig. 3: Schnittansicht und Draufsicht entlang der Ebene III-III in Fig.2,
- Fig. 4: perspektivische Ansicht des Messschenkels mit zu vermessenden Rohren,
- Fig. 5: perspektivische Ansicht des Messschenkels mit vier zu vermessenden Rohrabschnitten,
- Fig. 6: schematische Darstellung der Lage von vier bzw. zwei gleichzeitig zu vermessenden Rohrabschnitten.

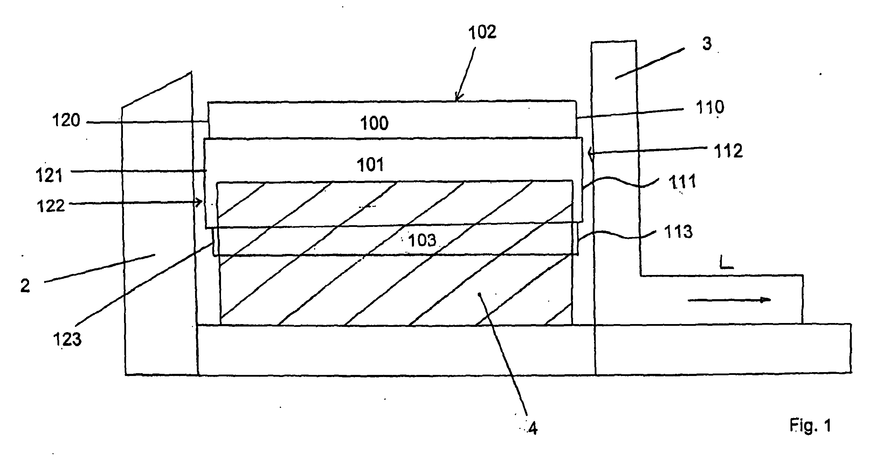

Fig. 1 zeigt die grundsätzliche Anordnung der Messeinrichtung zur präzisen Bestimmung der Länge für längliche, zylindrische Profile, insbesondere Rohrabschnitten 100, 101, 102, 103 aber auch Vollprofilabschnitten. Die Messeinrichtung eignet sich insbesondere zur Verwendung in Kombination mit einer (nicht dargestellten) vorgeordneten Rohrschneide- oder Rohrsägemaschine.

Moderne Rohrschneidemaschinen gestatten das Ablängen von Rohrabschnitten 1 eines Rohres mit kurzen Taktzeiten. Dabei kann für einen kompletten Schneidvorgang weniger als eine Sekunde benötigt werden. Während eines Arbeitstaktes wird das Rohr in der Sägemaschine vorgeschoben, abgetrennt und der abgetrennte Rohrabschnitt 1 entnommen. Die abgelängten Rohrabschnitte 100, 101, 102, 103 sind mit ausgesprochen hoher Präzision zu fertigen. Dabei darf eine vom Kunden vorgegebene Länge z.B. um höchstens 1 µm variieren, damit der Rohrabschnitt 100, 101, 102, 103 verwendbar bleibt.

Die erfindungsgemäße Messeinrichtung gestattet die gleichzeitige Längenmessung bzw. -prüfung einer Mehrzahl, insbesondere von einem, zwei, drei oder vier abgelängten Rohrabschnitten 100, 101, 102, 103 gleichzeitig und mit der vorgegebenen oben genannten Präzision.

Die Messeinrichtung weist einen positionsfesten Messschenkel 2 auf und einen in Längsrichtung L hin- und her verfahrbaren Messschenkel 3. Die Rohrabschnitte 100, 101, 102, 103 werden zwischen den beiden Messschehkeln 2, 3 zur Längenprüfung auf einer Aufnahme 4 gelagert. Die Aufnahme 4 ist derart ausgeformt, dass die in der Fg. 1 dargestellten vier Rohrabschnitte 100, 101, 102, 103 bei jeder Messung in der gleichen Position relativ zu den beiden Messschenkeln 2, 3 selbsttätig nach Einlegen in die Aufnahme 4 zur Ruhe kommen. Die vier Rohrabschnitte 100, 101, 102, 103 sind dabei parallel zueinander in Längsrichtung angeordnet Nachdem die vier Rohrabschnitte 100, 101, 102, 103 zwischen den beiden Messschenkeln 2, 3 in der Aufnahme 4 stabil und ruhig positioniert sind, wird der verfahrbare Messschenkel 3 zum Rohrabschnitt 100, 101, 102, 103 hin verfahren, bis dass jeweils beide Rohrenden 110, 111, 112,113; 120,1 21, 122, 123, der vier Rohrabschnitte 100, 101, 102, 103 mit jeweils einem der beiden Messschenkel 2, 3 in Kontakt kommen. Während des Kontaktes wird die Längenmessung durchgeführt. Danach wird der verfahrbare Messschenkel 3 vom positionsfesten Messschenkel 2 in Längsrichtung der Rohrabschnitte 100, 101, 102, 103 weg verfahren und die vier Rohrabschnitte 100, 101, 102, 103 zur Auslieferung oder Weiterverarbeitung, insbesondere der Rohrabschnittsenden 110, 111, 112, 113; 120, 121, 122, 123 entnommen.

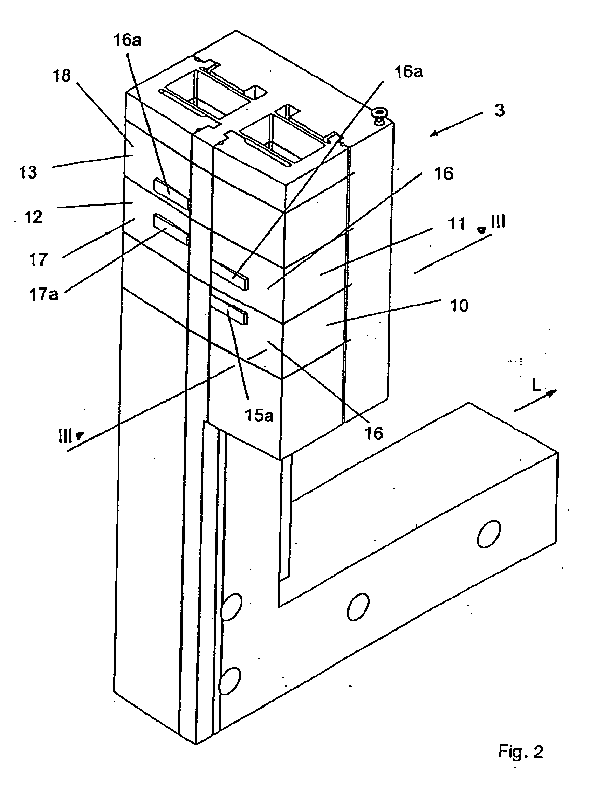

Zur Bestimmung der Länge jedes einzelnen Rohrabschnitts 100, 101, 102, 103 weist der in Längsrichtung L verfahrbare Messschenkel 3 vier individuell meßende Messstempel 10, 11, 12, 13 auf. Die Messstempel 10, 11, 12, 13 sind in Fig. 2 in einer perspektivischen Draufsicht dargestellt.

Der Messschenkel 3 ist im Wesentlichen L-förmig ausgebildet, wobei der untere kürzere L-Schenkel antreibbar in einer Führung der Messeinrichtung vorgesehen ist, während der lange, nach oben neben der Aufnahme 4 abstehende L-Schenkel die vier einzelnen Messstempel 10, 11, 12, 13 aufweist. Die vier Messstempel 10, 11, 12, 13 sind zu zwei Paaren angeordnet, die um einen Abstand der beiden Messstempel 10, 11 bzw. 12, 13 vertikal versetzt gegeneinander einander gegenüberliegen.

In Fig. 2 ist eine Kontaktzunge 15, 16, 17, 18 jedes Messstempels 10, 11, 12, 13 dargestellt, wobei zur Aufnahme 4 jede Kontaktzunge 15, 16, 17, 18 eine Auflagefläche 15a, 16a, 17a, 18a aufweist. Die Auflageflächen 15a, 16a, 17a, 18a sind jeweils parallel zu einer durch ein zugeordnetes Rohrabschnittsende 6 gebildeten Fläche angeordnet, während die Kontaktzungen 15, 16, 17, 18 in einem leicht zur Aufnahme 4 geneigten Winkel angeordnet sind. Während der Längenmessung der vier Rohrabschnitte 100, 101, 102, 103 stößt ein Rohrabschnittsende 110, 111, 112,113 gegen jeweils genau eine Auflagefläche 15a, 16a, 17a, 18a einer der Kontaktzungen 15, 16, 17, 18. Die Kontaktzungen 15, 16, 17, 18 sind elastisch gegen den Messschenkel 3 beweglich.

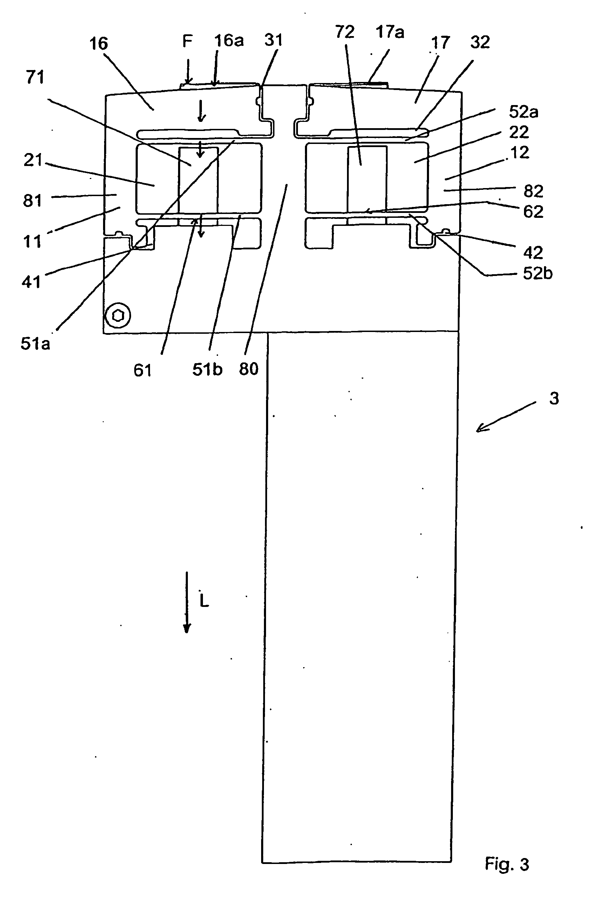

Die in Fig. 3 dargestellte Schnittansicht entlang der Ebene III-III mit Draufsicht auf den verfahrbaren Messschenkel 3 gibt einen Einblick in das Innere des langen L-Schenkels frei. Dabei ist jeweils eine der Auflageflächen der beiden linken 17a, 18a und der beiden rechten Auflageflächenpaare 15a, 16a zu erkennen, da beide jeweils genau übereinander angeordnet sind. In Fig. 3 sind die beiden nebeneinander angeordnete Messstempel 11, 12 dargstellt. Die in Fig. 3 zu erkennenden beiden, jeweils einem Messstempel 11, 12 zugeordneten Freiräume 21, 22 und jeweils einem Messstempel 11, 12, zugeordneten beiden Spalten 31, 41, 32, 42 durchziehen den langen L-Schenkel jeweils vollständig.

Ein Vergleich mit Fig. 2 zeigt, dass die in Fig. 3 dargstellten linken Spalten und der linke Freiraum nur etwa halb so lang wie die in Fig. 3 dargestellten rechten beiden Spalten und der rechte Freiraum sind. Die in Fig. 3 dargstellte Anordnung lässt sich in besonders vorteilhafter Weise durch eine Drahterodiermaschine mit ausgesprochen hoher Präzision aus einem einstückigen Metallblock herstellen. Sie ist damit besonders stabil und verschleißfrei.

Jeder der beiden in Fig. 3 dargestellten Messstempel 11, 12 weist jeweils genau eine Kontaktzunge 16, 17 mit genau einer zugeordneten Kontaktfläche 16a, 17a auf. Die Kontaktzunge 16, 17 ist im Wesentlichen quer zur Längsrichtung L ausgerichtet und in Längsrichtung L elastisch beweglich. Ein inneren Ende der Kontaktzunge 16, 17 ist frei, während ein gegenüber liegendes äußeres Ende der Kontaktzunge 16, 17 integral mit dem Festkörper des übrigen Messstempels 11, 12 zusammenhängt.

Jeder der Messstempel 11, 12 weist zwei sich parallel sich den zugehörigen Freiraum 21, 22 begrenzende gegenüberliegende Stege 51a, 51b; 52a, 52b auf. Ein jeweils erster Steg 51a, 52a ist über jeweils einen ersten schmalen Spalt 31, 32 von der zugehörigen Kontaktzunge 16, 17 beabstandet. Die Stege 51a, 51b, 52a, 52b verlaufen senkrecht zur Längsrichtung L, und sie sind in Längsrichtung L elastisch verbiegbar. Ein jeweils zweiter Steg 51b, 52b ist zum zugeordneten ersten Steg 51a, 52a parallel und von diesem über einen jeweiligen Freiraum 21, 22 beabstandet vorgesehen. Jeder der zweiten Stege 51b, 52b weist ein Loch 61, 62 auf, durch das jeweils einer der Messsensoren 71, 72 hindurchgeführt ist. Jeder der beiden zylindrischen Messsensoren 71, 72 ist mit dem Festkörper des Messstempels 11, 12 positionsfest an seinem der Kontaktzunge 16, 17 abgewandten Ende verbunden, während der eigentliche Sensorbereich des Messsensors 71, 72 innerhalb des zugeordneten Freiraumes 21, 22 angeordnet ist und von der der Kontaktzunge 16, 17 abgewandten Stegfläche beabstandet ist und auf sie gerichtet ist. Der Sensor 71, 72 weist ein induktives Messsystem auf, der den Abstand zwischen Sensorfläche und Stegfläche auf 0,4 µm genau bestimmt.

Die Funktionsweise eines der Messstempel wird in Fig. 3 anhand des linken Messstempels 11 beschrieben. Die beiden Stege 51a, 51b weisen jeweils ein erstes und zweites Ende auf. Die beiden ersten Enden sind über einen gegenüber dem Messschenkel positionsfesten Abstandsabschnitt 80 integral verbunden, während die beiden zweiten Enden mit einem in Längsrichtung etwas hin und her beweglichen Abstandsabschnitt 81 integral ausgeformt sind. Die Kontaktzunge 16 und der mit ihr starr verbunden bewegliche Abstandsabschnitt 80 sind gemeinsam elastisch über die beiden parallelen Stege 51a, 51b mit dem positionsfesten Abstandsabschnitt 80 und damit mit dem Festkörper des Messschenkels 3 verbunden.

Wenn eine Druckkraft eines Endes 110, 111, 112, 113 eines Rohrabschnitts 100, 101, 102, 103 gegen die Kontaktfläche 16a der linken Kontaktzunge 16 drückt, wird die Kontaktzunge 16 ein Stück weit in den Messschenkel 3 hinein verformt. Aufgrund der integralen Ausbildung der Gesamtkonstruktion biegen sich sowohl der erste als auch der zweite Steg 51a, 51 b ein Stück weit in den Messschenkel hinein, d.h. in Fig. 3 nach unten. Die Verformung der beiden Stege 51a, 51b steht in einem bestimmten Verhältnis zur Verformung der Kontaktzunge 16. Der Messsensor 71 wird entsprechend kalibriert und aufgrund der Abstandsveränderung zwischen erstem Steg 51a und Messsensor 71 kann präzise auf die Länge des gemessenen Rohrabschnitts 100, 101, 102, 103 geschlossen werden. Die Verformungsbewegungen der Bauteile sind durch Pfeile dargestellt.

Die Ausbildung des erfindungsgemäßen Messstempels 11, insbesondere aufgrund der beiden parallelen, senkrecht zur Längsrichtung L angeordneten Stege 51a, 51b, ermöglicht die exakte Führung sowohl der Kontaktzunge 16 als auch des beweglichen Abstandsabschnitts 81 in Längsrichtung L. Bewegungen senkrecht zur Längsrichtung L sowie Winkel- oder Drehbewegungen finden gar nicht oder nur in einem nicht messbaren Maße statt.

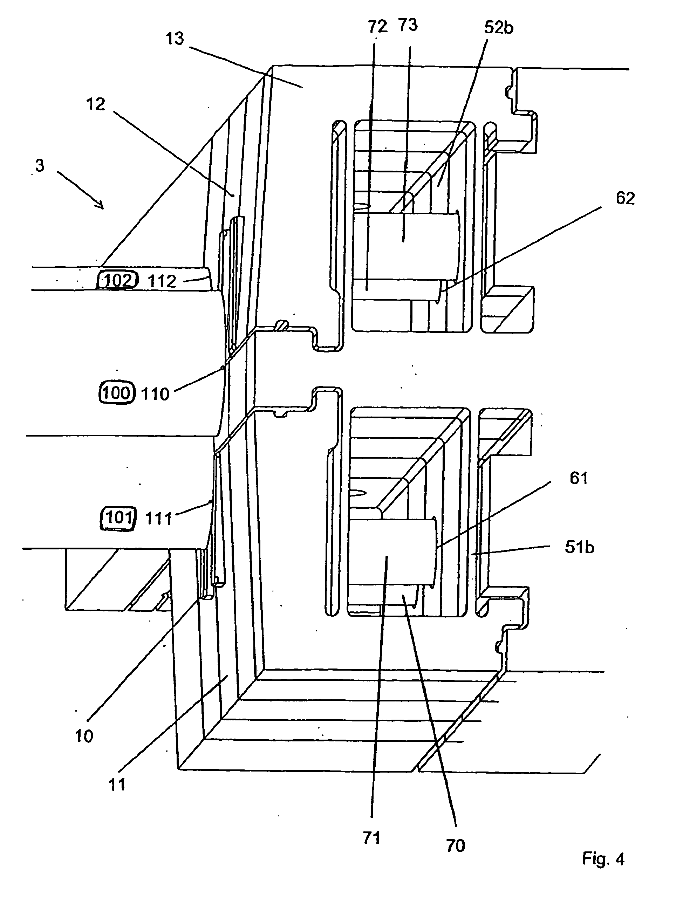

Fig. 4 zeigt die Draufsicht auf den verfahrbaren Messschenkel 3 in einer schrägen Perspektive im Vergleich zu Fig. 3. Zusätzlich sind insbesondere drei der vier Enden 110, 111, 112,113 der vier zu vermessenden Rohrabschnitte 100, 101, 102, 103 zu sehen. Der verfahrbare Messschenkel 3 ist noch nicht im Kontakt mit den vier Rohrabschnittsenden 110, 111, 112, 113. Die jeweils zweiten Stege 51 b, 52b weisen jeweils ein kreisförmiges Loch 61, 62 auf, durch das jeweils einer der Messsensoren 71, 72 hindurchgeführt ist. Die Messsensoren 71, 72 sind zylindrisch ausgebildet und mit ihrem dem Rohr abgewandten Ende fest mit dem Messschenkel 3 verbunden. Fig. 4 zeigt deutlich die einstückige Ausbildung nicht nur der vier Messstempel 10, 11, 12, 13, sondern auch die einstückige Ausbildung des L-Schenkels des Messschenkels 3 insgesamt.

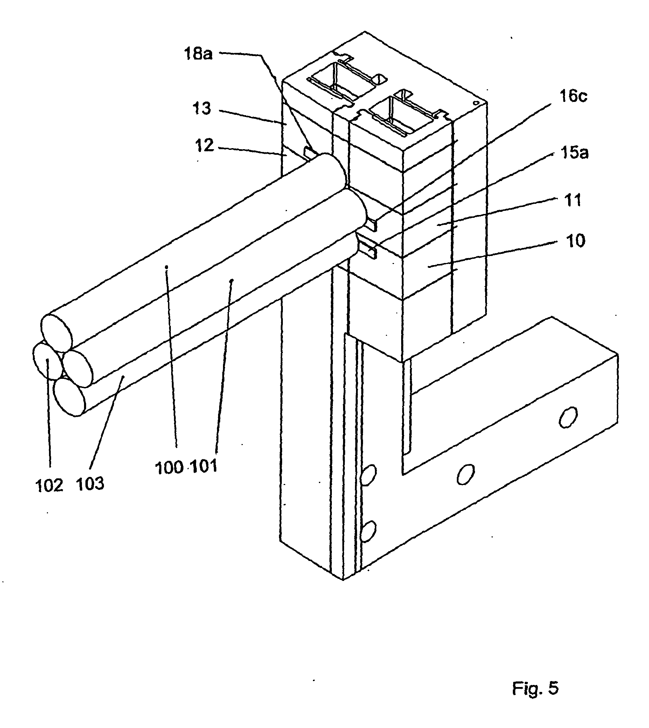

Fig. 5 zeigt die Positionierung der vier zu vermessenden Rohrabschnitte 100, 101, 102, 103 am Messschenkel 3. Dabei ist zu erkennen, dass jedem der Enden 110, 111, 112, 113 der Rohrabschnitte 100, 101, 102, 103 jeweils genau ein Messstempel 10, 11, 12, 13 zugeordnet ist und jeder Rohrabschnitt 100, 101, 102, 103 mit genau einer der Auflageflächen 15a, 16a, 17a. 18a in Berührung kommt. Dadurch ist gewährleistet, dass mit jedem Messstempel 10, 11, 12 die Länge genau eines der Rohrabschnitte 100, 101, 102, 103 gemessen werden kann.

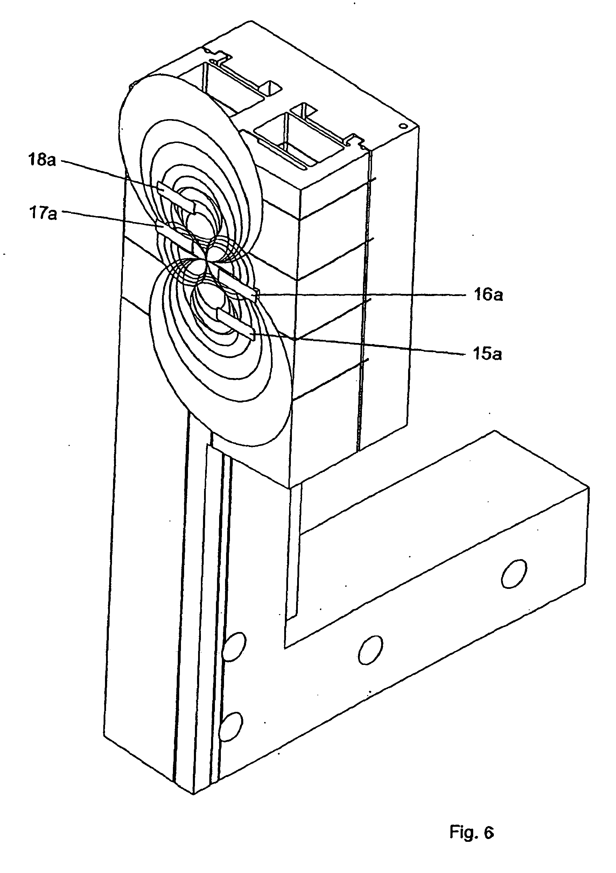

Fig. 6 zeigt in einer Prinzipansicht die Lage der Enden von vier bzw. zwei gleichzeitig zu vermessenden Rohrabschnitten mit verschiedenen Querschnitten. Die vier Auflageflächen 15a, 16a, 17a, 18a sind zu zwei vertikal angeordneten Paaren parallel nebeneinander und vertikal um den Abstand der beiden Paare versetzt angeordnet. Somit ist gewährleistet, dass bei vier gleichzeitig zu vermessenden Rohren jedes Rohrende mit genau einer Auflagefläche 15a, 16a, 17a, 18a in Berührung kommt. Bei zwei gleichzeitig zu vermessenden Rohrabschnitten wird der oberste bzw. unterste Messsensor jedes der beiden Messsensorpaare in Fig. 6 ausgeschaltet und die Messung nur über die beiden sich gegenüberliegenden Auflageflächen 16a, 17a durchgeführt.

Nebenbei sei bemerkt, dass die erfindungsgemäße Anordnung auch die Messung der Länge genau eines Rohrabschnittes gestattet. Dabei können beispielsweise alle vier Messsensoren 71, 72, 73, 74 ausgeschaltet werden und die Längenmessung erfolgt dann nur über den Entfernungsmesser, der dem verfahrbaren Messschenkel 3 zugeordnet ist.

### Bezugszeichenliste:

- 2: Messschenkel
- 3: Messschenkel
- 10: Messstempel
- 11: Messstempel
- 12: Messstempel
- 13: Messstempel
- 12: Messstempel
- 15: Kontaktzunge
- 15a: Auflagefläche
- 16: Kontaktzunge
- 16a: Auflagefläche
- 17: Kontaktzunge
- 17a: Auflagefläche
- 18: Kontaktzunge
- 18a: Auflagefläche
- 21: Freiraum
- 22: Freiraum
- 31: Spalt
- 32: Spalt
- 41: Spalt
- 42: Spalt
- 51 a: Steg
- 51 b: Steg
- 52a: Steg
- 52b: Steg
- 61: Loch
- 62: Loch
- 70: Sensor
- 71: Sensor
- 72: Sensor
- 73: Sensor
- 80: Abstandsabschnitt
- 81: Abstandsabschnitt
- 82: Abstandsabschnitt
- 100: Profil
- 101: Profil
- 102: Profil
- 103: Profil
- 110: Profilende
- 111: Profilende
- 112: Profilende
- 113: Profilende
- 120: Profilende
- 121: Profilende
- 122: Profilende
- 123: Profilende

- L: Längsrichtung

## Patentansprüche

1. Messeinrichtung zur Messung der Länge von in einer Längsrichtung angeordneten länglichen Profilen (100, 101, 102,103), insbesondere Rohren, zwischen mindestens zwei sich gegenübediegenden Messschenkeln (2, 3) von denen mindestens einer bis zum Kontakt beider Enden (110, 111, 112, 113, 120, 121, 122, 123) des länglichen Profils (100, 101, 102, 103) an jeweils einem Messschenkel (2, 3) in Längsrichtung (L) verfahrbar ist, wobei die Messeinrichtung die mindestens zwei Messschenkel (2,3) aufweist, und wenigstens einer der Messschenkel (2, 3) mindestens einen Messstempel (10, 11, 12, 13) aufweist mit jeweils wenigstens zwei quer zur Längsrichtung (L) verlaufenden voneinander beabstandeten in Längsrichtung (L) elastisch hin- und her beweglichen Stegen (51a, 51b, 52a. 52b) mit jeweils einem ersten und einem zweiten Ende und
deren erste Enden jeweils mit einem während der Längenmessung positionsstabil gegenüber dem einen Messschenkel (3) angeordneten Abstandsabschnitt (80) verbunden sind und
deren zweite Enden jeweils mit einem gegenüber dem einen Messschenkel (3) während der Längenmessung in Längsrichtung (L) durch eine von den länglichen Profilen (100, 101. 102, 102) auf eine starr verbundenen Kontaktzunge (15, 16, 17, 18) ausgeübte Druckkraft beweglichen Abstandsabschnitt (81,82) verbunden sind, und wobei die Messeinrichtung jeweils einem dem Messstempel (10, 11, 12, 13) zugeordneten eine durch die elastische Verformung hervorgerufene Positionsänderung von wenigstens Teilen des Messstempels (10, 11, 12, 13) messenden Sensor (70, 71, 72, 73) aufweist.

2. Messeinrichtung nach Anspruch 1,
**dadurch gekennzeichnet, dass** die ersten Enden der ersten und zweiten Stege (51a, 52a) der Messtempel (10, 11,12, 13) einstückig mit dem jeweiligen positionsfesten Abstandsabschnitt (80) ausgebildet sind und die zweiten Enden mit dem jeweiligen beweglichen Abstandsabschnitt (81) einstückig ausgebildet sind.

3. Messeinrichtung nach Anspruch 1 oder 2,
**dadurch gekennzeichnet, dass** die Kontaktzungen (15, 16, 17, 18) einstückig mit dem jeweiligen beweglichen Abstandsabschnitt (81) verbunden sind und die Druckkraft während der Längenmessung in eine Bewegung in Längsrichtung (L) umwandelt.

4. Messeinrichtung nach Anspruch 1, 2 oder 3,
**dadurch gekennzeichnet, dass** die ersten Stege (51a) jeweils über einen ersten schmalen Spalt (31) von der jeweiligen Kontaktzunge (16) beabstandet sind und die zweiten Stege (51b) jeweils durch einen Freiraum (21, 22) von den ersten Stegen (51a) beabstandet sind und die ersten Stege (51a) in Längsrichtung (L) zwischen den Kontaktzungen (16) und den zweiten Stegen (51b) angeordnet sind.

5. Messeinrichtung nach wenigstens einem der Ansprüche 1 bis 4,
**dadurch gekennzeichnet, dass** die Messsensoren (71, 72) positionsfest mit dem Messschenkel (3) verbunden sind und durch jeweils eine Öffnung (61, 62) in den zweiten Stegen (51b, 52b) hindurchgeführt sind und die Sensorflächen im Wesentlichen frei im jeweiligen Freiraum (21, 22) angeordnet sind und jeweils auf eine der Kontaktzunge (15, 16, 17, 18) abgewandten Fläche der ersten Stege (51a, 52a) gerichtet sind.

6. Messeinrichtung nach wenigstens einem der vorstehenden Ansprüche,
**dadurch gekennzeichnet, dass** der verfahrbare Messschenkel (3) mit einem Entfemungsmesser zur Messung der Verfahrstrecke verbunden ist und der Entfemungsmesser und der wenigstens eine Messsensor mit einer Datenverarbeitungseinheit verbunden sind, mit der die Profillänge bestimmbar ist.

7. Messeinrichtung nach Anspruch 1,
**dadurch gekennzeichnet**, durch eine Vielzahl von Messstempeln (10, 11, 12, 13), die alle an genau einem der Messschenkel (2, 3) angeordnet sind.

8. Messeinrichtung nach Anspruch 7,
**dadurch gekennzeichnet, dass** der verfahrbare Messschenkel (3) zwei Reihen von Messstempeln (10, 11, 12, 13) aufweist, die nebeneinander, vertikal versetzt zueinander angeordnet sind.

9. Messeinrichtung nach Anspruch 1, 7 oder 8,
**gekennzeichnet durch** eine Schalteinrichtung mit der eine ausgewählte Anzahl an Messsensoren (71, 72) einschaltbar ist.

## Claims

1. Measuring device for measuring the length of elongate profiles (100, 101, 102, 103) arranged in a longitudinal direction, in particular pipes, between at least two measuring legs (2, 3) located opposite one another, at least one of which can be displaced in the longitudinal direction (L) until the two ends (110, 111, 112, 113, 120, 121, 122, 123) of the elongate profile (100, 101, 102, 103) make contact with a respective measuring leg (2, 3), wherein the measuring device comprises the at least two measuring legs (2, 3),
and at least one of the measuring legs (2, 3) has at least one measuring ram (10, 11, 12, 13) with in each case at least two webs (51a, 51b, 52a, 52b) which run transversely to the longitudinal direction (L) and which can be moved elastically back and forth in the longitudinal direction (L) at a distance from one another, each web having a first end and a second end,
the first end of which is in each case connected to a spacer section (80) which is arranged in a positionally stable manner relative to a measuring leg (3) during the length measurement, and
the second end of which is in each case connected to a spacer section (81, 82) which can be moved in the longitudinal direction (L) relative to a measuring leg (3) during the length measurement by means of a pressure force exerted by the elongate profiles (100, 101, 102, 102) on a rigidly connected contact tongue (15, 1E, 17, 18),
and wherein the measuring device comprises in each case a sensor (70, 71, 72, 73) which is assigned to the measuring ram (10, 11, 12, 13) and which measures the change in position of at least parts of the measuring ram (10, 11, 12, 13) brought about by the elastic deformation.

2. Measuring device according to claim 1, **characterised in that** the first ends of the first and second webs (51 a, 52a) of the measuring rams (10, 11, 12, 13) are formed in one piece with the respective positionally fixed spacer section (80), and the second ends are formed in one piece with the respective movable spacer section (81).

3. Measuring device according to claim 1 or 2, **characterised in that** the contact tongues (15, 16, 17, 18) are connected in one piece with the respective movable spacer section (81), and the pressure force during the length measurement is transformed into a movement in the longitudinal direction (L).

4. Measuring device according to claim 1, 2 or 3, **characterised in that** the first webs (51a) are in each case spaced apart from the respective contact tongue (16) via a first narrow gap (31), and the second webs (51b) are in each case spaced apart from the first webs (51a) by a clearance (21, 22), and the first webs (51a) are arranged between the contact tongues (16) and the second webs (51 b) in the longitudinal direction (L).

5. Measuring device according to at least one of claims 1 to 4, **characterised in that** the measuring sensors (71, 72) are connected to the measuring leg (3) in a positionally fixed manner and are passed through a respective opening (61, 62) in the second webs (51b, 52b), and the sensor surfaces are arranged essentially free in the respective clearance (21, 22) and are oriented in each case towards a surface of the first webs (51 a, 52a) remote from the contact tongue (15, 16, 17, 18).

6. Measuring device according to at least one of the preceding claims, **characterised in that** the displaceable measuring leg (3) is connected to a distance meter for measuring the displacement travel, and the distance meter and the at least one measuring sensor are connected to a data processing unit, by means of which the profile length can be determined.

7. Measuring device according to claim 1, **characterised by** a plurality of measuring rams (10, 11, 12, 13) which are all arranged on just one of the measuring legs (2, 3).

8. Measuring device according to claim 7, **characterised in that** the displaceable measuring leg (3) has two rows of measuring rams (10, 11, 12, 13) which are arranged next to one another and vertically offset from one another.

9. Measuring device according to claim 1, 7 or 8, **characterised by** a switching device, by means of which a selected number of measuring sensors (71, 72) can be switched on.

## Revendications

1. Dispositif de mesure destiné à mesurer la longueur de profilés (100, 101, 102, 103) allongés, en particulier de tubes, disposés dans un sens longitudinal, entre au moins deux bras de mesure (2, 3) situés en vis-à-vis l'un de l'autre, dont au moins un peut être déplacé dans le sens longitudinal (L), jusqu'à ce que les deux extrémités (110, 111, 112, 113, 120, 121, 122, 123) du profilé (100, 101, 102, 103) allongé soient en contact respectivement avec un bras de mesure (2, 3), le dispositif de mesure comportant les deux bras de mesure (2, 3), au nombre d'au moins deux, et au moins un des bras de mesure (2, 3) présentant au moins un tampon de mesure (10, 11, 12, 13) doté chaque fois d'au moins deux traverses (51a, 51b, 52a, 52b) espacées l'une de l'autre, qui ont chacune une première et une deuxième extrémité, sont disposées perpendiculairement au sens longitudinal (L) et peuvent être déplacées de façon élastique en un mouvement de va-et-vient, dans le sens longitudinal (L), et
dont les premières extrémités sont reliées respectivement à une portion d'espacement (80) disposée dans une position stable par rapport à l'un des bras de mesure (3) pendant la mesure de longueur, et
dont les deuxièmes extrémités sont reliées à une portion d'espacement (81, 82) qui, pendant la mesure de longueur, peut être déplacée par rapport à l'un des bras de mesure (3), dans le sens longitudinal (L), par une force d'appui exercée par les profilés (100, 101, 102, 103) allongés sur une lame de contact (15, 16, 17, 18) reliée de manière rigide,
le dispositif de mesure présentant respectivement un capteur (70, 71, 72, 73) associé au tampon de mesure (10, 11, 12, 13) et mesurant un changement de position, au moins de parties du tampon de mesure (10, 11, 12, 13), provoquée par la déformation élastique.

2. Dispositif de mesure selon la revendication 1, **caractérisé par le fait que** les premières extrémités des première et deuxième traverses (51a, 52a) des tampons de mesure (10, 11, 12, 13) sont réalisées d'une seule pièce avec la portion d'espacement (80) à position fixe respective, et les deuxièmes extrémités sont réalisées d'une seule pièce avec la portion d'espacement (81) mobile respective.

3. Dispositif de mesure selon la revendication 1 ou 2, **caractérisé par le fait que** les lames de contact (15, 16, 17, 18) sont reliées d'un seul tenant à la portion d'espacement (81) mobile respective et, pendant la mesure de longueur, transforment la force d'appui en un mouvement dans le sens longitudinal (L).

4. Dispositif de mesure selon la revendication 1, 2 ou 3, **caractérisé par le fait que** les premières traverses (51a) sont espacées de la lame de contact (16) respective, chaque fois d'un premier interstice (31) étroit, et les deuxièmes traverses (51b) sont espacées des premières traverses (51a), chaque fois d'un espace libre (21, 22), et les premières traverses (51a) sont disposées dans le sens longitudinal (L) entre les lames de contact (16) et les deuxièmes traverses (51b).

5. Dispositif de mesure selon au moins une des revendications 1 à 4, **caractérisé par le fait que** les capteurs de mesure (71, 72) sont reliés dans une position fixe au bras de mesure (3) et passent respectivement dans une ouverture (61, 62) prévue dans les deuxièmes traverses (51b, 52b), et les surfaces de capteur sont disposées de façon sensiblement libre dans l'espace libre (21, 22) respectif et sont dirigées respectivement sur une surface des premières traverses (51a, 52a) qui est éloignée de la lame de contact (15, 16, 17, 18)

6. Dispositif de mesure selon au moins une des revendications précédentes, **caractérisé par le fait que** le bras de mesure (3) déplaçable est relié à un appareil télémétrique destiné à mesurer la course de déplacement, et ledit appareil télémétrique et le capteur de mesure, au nombre d'au moins un, sont reliés à une unité de traitement de données qui permet de déterminer la longueur des profilés.

7. Dispositif de mesure selon la revendication 1, **caractérisé par le fait qu'**il comporte une pluralité de tampons de mesure (10, 11, 12, 13) qui sont tous disposés sur exactement un des bras de mesure (2, 3).

8. Dispositif de mesure selon la revendication 7, **caractérisé par le fait que** le bras de mesure (3) déplaçable présente deux rangées de tampons de mesure (10, 11, 12, 13) qui sont disposés les uns à côté des autres, en étant décalés verticalement.

9. Dispositif de mesure selon la revendication 1, 7 ou 8, **caractérisé par le fait qu'**il comporte un dispositif de commutation qui permet d'activer un nombre sélectionné de capteurs de mesure (71, 72).
